# EUROPEAN PATENT APPLICATION

(11) **EP 4 722 945 A1**
(43) Date of publication of application: **08.04.2026**
(21) Application number: 25200910.5
(22) Date of filing: 08.09.2025
(51) Int. Cl.: G06F 16/3329

(54) **VERIFICATION OF RETRIEVAL AUGMENTED GENERATION FOR MODELS**

(30) Priority: 01.10.2024 US 202418904048
(71) Applicant: Microsoft Technology Licensing, LLC, Redmond, WA 98052 (US)
(72) Inventor: TZARFATY, LINOY SIMHA, Redmond, 98052 (US); BORNSTEIN, AARON TOBY, Redmond, 98052 (US); GRUDA IDELOVITCH, EINAT, Redmond, 98052 (US); BAUMEL, TAL, Redmond, 98052 (US); BITRAN, HADAS, Redmond, 98052 (US); MEGED, YEHUDIT KEREN, Redmond, 98052 (US); KVELER, KSENYA, Redmond, 98052 (US); EFRATI, RAN, Redmond, 98052 (US)
(74) Representative: CMS Cameron McKenna Nabarro Olswang LLP

(57) **Abstract**

An exemplary implementation verifies an answer generated by a generative artificial intelligence model. The answer is responsive to an augmented query. The augmented query comprises a query submitted by a user and a request to answer the query using evidence determined to be relevant to the query. The answer is verified to be relevant to both the query and the evidence, facts are extracted from the evidence, and claims are extracted from the answer. Claim-to-fact entailment scores corresponding to each of the respective claim-to-fact pairings are determined. The scores are determined by an agreement analyzer comprising a natural language inference model. The answer is verified based on a check of the scores. A verified answer, a qualified answer, and/or a failure message is communicated to the user based on the verification.

## Description

### BACKGROUND

Language models are transforming information technology. These computational models can provide strikingly adept and comprehensible information on virtually any topic imaginable. However, there are safety concerns. One concern is that models occasionally give fabricated or otherwise incorrect information confidently presented by the model as correct and reliable. These fabrications are referred to as hallucinations.

Retrieval augmented generation (RAG) for models has proven to be a useful tool to overcome knowledge gaps in the model and improve the reliability of answers generated by models. RAG works by combining reliably accurate reference material into a query. A typical example is a query seeking information about a recent event. Because the model was trained using historical information prior to the recent event, the model would lack knowledge about the recent event. To fill in that knowledge gap, retrieval augmented generation would allow the model (or an intermediary) to search the internet for information on the recent event and to append that material to the query with an instruction such as, "answer the above questions based on the following information."

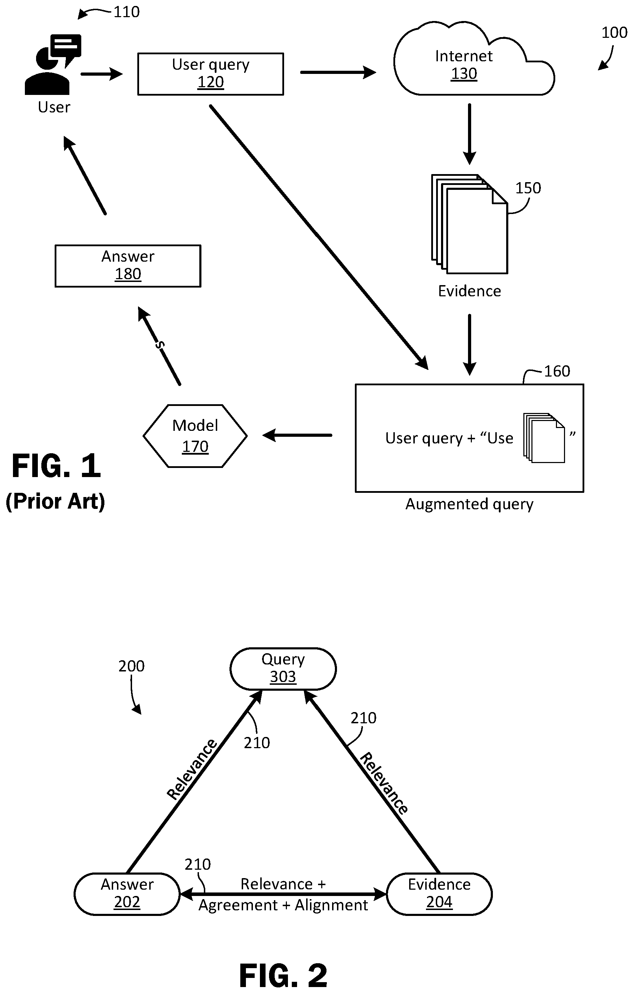

FIG. 1 shows a schematic diagram 100 of an exemplary RAG procedure. User 110 inputs query 120 into a user interface (not shown). The prompt is taken as the basis of a search of a dataset, such as a web search of internet 130. In a typical example, query 120 is simply submitted to a web search engine and then contents of some number of the top-ranked web pages or documents returned by the search engine are collected as evidence 150. In some examples, additional processing and filtering (not shown) of the results may occur to determine the final set of evidence 150. Then, query 120 is combined with evidence 150 to form augmented query 160 as described above. Augmented query 160 is then submitted to the model 170 which generates in response thereto answer 180 which is presented back to user 110.

Improvement on RAG processes has been the subject of intensive research. However, with existing RAG approaches, even when the evidence is carefully curated and tailored to query 120, there is no guarantee that (1) the evidence is relevant to the query, (2) the answer is relevant to the evidence, (3) the answer is relevant to the query, and/or (4) the answer is in agreement with the evidence. This is because of the unpredictable nature of models discussed above. In many use cases, unpredictable outputs and occasional hallucinations are tolerable, but in certain sensitive knowledge domains, such as the field of medicine, it can have serious consequences.

### SUMMARY

Example solutions for verifying an answer generated by a generative artificial intelligence (GAI) model are described herein. The disclosed examples are described in detail below with reference to the accompanying drawing figures listed below. The following summary is provided to illustrate some examples disclosed herein. An exemplary method for verifying an answer generated by a GAI model, the answer being responsive to an augmented query comprising a query submitted by a user and a request to answer the query using only provided evidence determined to be relevant to the query. The method includes first verifying that the answer is relevant to both the query and the evidence, and if so, extracting facts from the evidence, and claims from the answer. A plurality of claim-to-fact entailment scores corresponding to each of the respective claim-to-fact pairings are determined, entailment scores being determined by an agreement analyzer comprising a natural language inference model. The answer is verified based on a check of the plurality of entailment scores. A verified answer, qualified answer, or failure message is communicated to the user based on the verifying.

### BRIEF DESCRIPTION OF THE DRAWINGS

The disclosed examples are described in detail below with reference to the accompanying drawing figures listed below:
FIG. 1 illustrates an exemplary retrieval augmented generation procedure known in the field of artificial intelligence;
FIG. 2 illustrates a simple directed graph diagram illustrating a conceptual approach to ensuring that an answer generated by a GAI model is accurate and complete, and based on credible sources;
FIG. 3 shows a schematic diagram illustrating by way of example a system for verifying retrieval augmented generation;
FIG. 4 shows a schematic diagram illustrating by way of example a verifier for verifying answers generated by a GAI model using retrieval augmented generation;
FIG. 5 shows a schematic diagram illustrating by way of example a semantic relevance analyzer and filter;
FIG. 6 shows a schematic diagram illustrating by way of example a semantic relevance analyzer;
FIG. 7 shows a schematic diagram illustrating by way of example an agreement analyzer;
FIG. 8 shows a flowchart illustrating by way of example a procedure performed by a verifier;
FIG. 9 shows a flowchart illustrating by way of example a procedure to determine whether an answer is verified or not based on relevance and entailment scores;
FIG. 10 is a block diagram of an example computing device for implementing aspects of the system to implement the answer verification.

Corresponding reference characters indicate corresponding parts throughout the drawings. Any of the drawings or figures may be combined into a single example or embodiment.

### DETAILED DESCRIPTION

Unpredictable and fabricated outputs by generative artificial intelligence (GAI) models, which drive chat bots and other artificial intelligence (AI) systems, can have serious consequences. Described herein is a technical solution to this technical problem, including checking an answer generated by a GAI model against reliable source materials using natural language processing (NLP) techniques. Aspects of the disclosure provide assurance that the information generated by the GAI model can be safely relied upon at least with respect to a specified knowledge domain, such as the field of medicine. In some examples, the system guarantees that every assertion included in the GAI model's answer is backed up by source documentation.

The system therefore solves serious technical challenges around GAI unpredictability. In some examples, this is accomplished using a service for verifying GAI-generated answers to queries using retrieval augmented generation (RAG). The service performs the RAG process that is refined to ensure semantic relevance of retrieved resources before submitting it with the augmented query. An answer generated by the GAI model is passed through a series of stages of processing to ensure each claim in the answer is grounded in one of the source documents. If the answer is not grounded by evidence, it is not passed to the user. This procedure eliminates, or at least reduces, the possibility of a fabricated answer to be returned to the user. Further, in some examples, the system semantically checks that each claim is in agreement with (e.g., entailed by) at least one fact extracted from the evidence and not contradicted by any fact. This procedure eliminates, or at least reduces, the possibility that an answer will be returned to the user that contains information that is not in agreement with the source documents.

The technology described herein therefore removes errors and improves the reliability of computing systems at least by ensuring that an answer generated by a GAI model is accurate, complete, and/or based on credible sources. This reduction in errors and the concomitant improvement in reliability improves the usability of GAI models, especially in sensitive knowledge domains such as the sciences, medicine, and law.

In addition, the disclosure improves the management of computing system resources by performing additional verification checks in some examples only after determining that the answer is relevant to both the query and the evidence. This reduces the usage of computing system resources, such as memory, bandwidth, and processing, for performing the additional verification checks, thereby improving the functioning of the underlying computing device.

FIG. 2 illustrates a simple directed graph diagram illustrating a conceptual approach to improving the reliability of answers generated by GAI models. Graph 200 shows relationships between query 303, evidence 204, and answer 202, referred to herein collectively as an "information triad." GAI models work by receiving a user query 303 as input, and generating an answer 202 as output. In the case of retrieval-augmented generation for GAI models, intermediate operations involve generating a set of evidence 204 from the query, augmenting the user query 303 with evidence 204 to form an augmented query, and then submitting the augmented query to the GAI model to generate the answer 202.

Described herein are approaches for verifying that (1) the answer is relevant to both the query and the evidence, (2) the evidence is relevant to the query, and (3) the answer is relevant and in agreement with the evidence, as indicated by edges 210 of graph 200.

In some examples, the evidence is fetched only from curated, credible sources of information. The fetched evidence is re-ranked using NLP algorithms to compute relevance scores between each fetched document and the query. These scores are used to (1) identify the most relevant documents and (2) ensure that each identified document meets a minimum threshold of relevancy, ensuring that each piece of evidence being presented to the GAI model is directed to the same subject matter as the query. All other documents, i.e., ones that do not meet the minimum threshold or the lowest ranked members that do based on some threshold number of fetched documents are discarded. For example, based on user or administrator configurations, a threshold for relevance scores may be 0.7 (with relevance scores ranging from zero to one) and no more than 10 documents are to be presented to the GAI model, then any documents having relevance score below 0.7 are discarded, and only the top 10 documents are presented to the GAI model.

Once an answer is obtained from the GAI model, the information triad - the query, evidence, and answer - are processed through multiple stages of analysis.

Having already determined the relevancy of the evidence to the query, the system determines the relevance score between the answer and the query, and the answer to the evidence. In the next stage, claims and facts are extracted from the answer and evidence, respectively. For example, the answer is parsed to extract claims therefrom, each claim being a statement (e.g., a sentence or a sentence clause) extracted from the answer. Likewise, facts (e.g., statements such as sentences or clauses) are extracted from the evidence. Having determined a set of claims and facts, each claim is tested individually against each fact to determine a relevance score. In addition, each claim and each fact are tested against the query to determine a relevance score therefor. Each claim is tested against each fact using natural language inference (NLI) technology, as described in further detail below, to determine an entailment score. The entailment score is a measure of agreement between the claim and fact. For example, to say that a fact entails a claim is to say that the claim follows from the fact or is in agreement with the fact. This ensures that not only is the claim relevant to the fact, but it is supported by the fact.

Having generated the relevance and entailment scores, a final stage of processing is performed in which a series of checks are performed on each claim to ensure that, as a whole, the answer is (1) relevant to the query, (2) complete (e.g., not missing important information), and (3) correct. The answer as a whole is relevant to the query if every claim in the answer is relevant to at least one fact. The answer is complete if there is no fact that is determined to be relevant to the query but that is not relevant to any claim. The answer is correct if every claim is entailed by at least one fact and is not contradicted by any fact. Any failure of these checks is referred to herein as a "discrepancy." If the answer passes all these checks, the answer is passed unmodified to the user.

In cases where a discrepancy exists, (e.g., an answer is determined to fail one of the checks mentioned above), then, depending upon how the solution is implemented, the GAI model may be re-queried, repeating the original query but with additional instructions to address the discrepancy which triggered the check failure. In an alternative approach, the discrepancy is reported and/or explained to the user, with or without the answer.

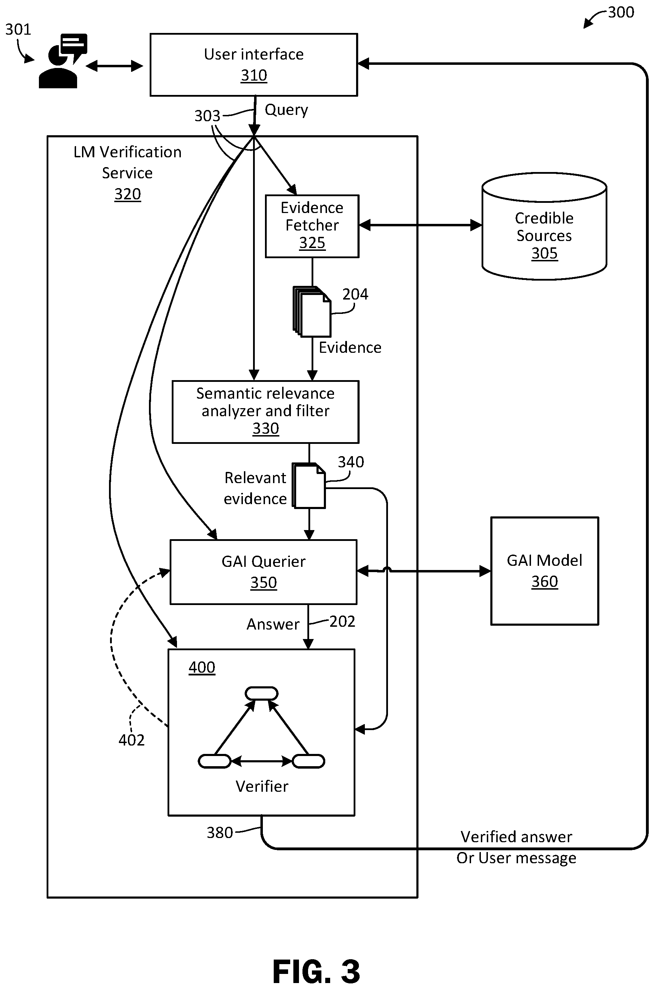

FIG. 3 shows a schematic diagram illustrating by way of example a system 300 for performing verified RAG. The system includes user interface 310 for interaction with user 301, GAI verification service 320, and GAI model 360.

User interface 310, in various examples, comprise one or more discrete systems enabling user interaction with service 320 and GAI model 360. In an exemplary implementation, user interface 310 includes a primary UI system in the form of an application programming interface (API) (not shown) for receiving and responding to communications from a secondary UI system (not shown). The secondary system may include a third-party server providing a "front end" service to users 301 via a tertiary UI system (not shown) such as a mobile application, a web-browser, etc. for direct interaction with users 301 using one or more devices (not shown) operated directly by users 301. The primary and secondary UI systems may each be independently deployed and operated by different entities, either in public cloud-based data centers or on-premises datacenters maintained and/or managed by the different entities. In this case, the primary and secondary systems are deployed with scalable infrastructure and associated with appropriate firewalls, load balancers, and so forth as appropriate. The term "scalable infrastructure" can refer to any sort of infrastructure in which multiple instances of an application, or component thereof, can be replicated and scaled-out to accommodate increasing loads, and likewise, removed from service in response to decreasing loads. Scalable infrastructures include virtualization-based technologies including hardware server virtualization, and containerization. In some examples, service 320 is cloud-based (e.g., executes in a cloud or datacenter environment using scalable infrastructure).

In another deployment, user interface 310 itself is a web server, or a collection of webservers configured behind a load balancer that are accessible by a user's web browser, or application servers accessible by a user's mobile device, or other type of application. As with the prior example, in this implementation, service 320 is cloud-based (e.g., executes in a cloud or datacenter environment using scalable infrastructure).

In yet a different sort of deployment, service 320 is deployed as an application or a component of an application directly within a user's device, while user interface 310 comprises physical user interfaces such as display screen, touchscreen, mouse, touchpad, keyboard, microphone, speakers, camera, etc.

GAI model 360 is a trained large language, small language, multi-modal model, or the like, that resides either in a cloud or datacenter, or locally on a user's endpoint device. GAI models are trained using a complex and resource-intensive process using vast amounts of data and powerful computing infrastructure. Data may be collected from public and private data sources including via web crawlers and privately managed libraries such as trade journal compilations. GAI models are built using deep neural networks, and largely focus on written natural language although multimodal GAI models are contemplated for GAI model 360. Once GAI model 360 is trained, it is typically deployed in an environment tailored to their specific requirements. In one example, GAI model 360 is deployed in cloud environments providing scalable infrastructure, which allows GAI model 360 to handle varying loads and to provide high availability. In an alternate example, GAI model 360 is deployed on an edge device (e.g., a user's computer or mobile system) suitable for the GAI model 360. GAI model 360 may be a domain-specific or a generalist GAI model.

Service 320 is logically interposed between user interface 310 and GAI model 360 and includes a number of functions that operate together to provide verification of answers generated by GAI model 360. These functions include evidence fetcher 325, semantic relevance analyzer and filter 330, GAI querier 350, and verifier 400. Each function may be implemented as a separate application or subservice for service 320, or as functions or procedures within a unified application providing service 320. Various functions may be combined so that a fewer number of discrete functions, services, or procedures are provided, and individual functions can be divided into smaller microservices to provide individual sub-functions as separate entities (e.g., for more efficient resource consumption and scalability and/or improved maintenance and improvement). As such, each function may be independently deployed as a separate scalable service or entity on distinct hardware or in different datacenters or clouds.

Evidence fetcher 325 receives query 303 from user interface 310 and, in one implementation, submits it in its original form to credible sources database 305. In an alternate embodiment, evidence fetcher 325 modifies the query before submitting it to credible sources database 305 using query transformation techniques in the field of retrieval augmented generation. Example implementations include query rewriting to reformulate the query to improve retrieval, step-back prompting to generate broader queries for better context retrieval, and sub-query decomposition in which queries are broken up into simpler sub-queries. If multiple credible sources databases 305 are available then the query can be submitted to each of them, and the results from those database are, as appropriate, deduplicated and aggregated.

Credible sources database 305, in an implementation, comprises a curated set of source documents that covers a particular domain. Credible sources database is, in an implementation, an internet search in which content is retrieved only from sites known to be credible. In an alternative implementation, credible sources database 305 comprises a private library of data, such as a compilation of academic journals from a particular knowledge domain such as a science discipline such as medicine. Credible sources database 305 can include entire books covering a topic within the knowledge domain of service 320. In such a case, curation of such sources includes, in an example implementation, dividing the book into chapters or sections for individual retrieval by evidence fetcher 325. In some cases, a document may be identified based on its abstract but is only available in image format, requiring optical character recognition, which is performed by evidence fetcher 325. In the knowledge domain of law, credible sources database 305 may be a database of court decisions, treatises, and law review journals. In some examples, evidence fetcher 325 is configured to search a specific set of one or more credible sources databases 305, and to aggregate and, if necessary, deduplicate the evidence fetched from multiple credible sources databases.

Evidence 204 fetched from credible sources databases 305 may comprise electronic documents in various formats, which may be normalized by evidence fetcher 325 into plain text using a common character encoding scheme such as Unicode. In some instances, evidence fetcher 325 uses machine translation (not shown) to translate fetched documents into a common language, such as English. Evidence 204 is accordingly a compilation of a set of individual evidence documents having plain text content, which may originate as hypertext markup language (HTML) text from a web page, images from an image-based portable document format (PDF) from which text is extracted using optical character recognition, and/or plain text of a book, article, post, etc.

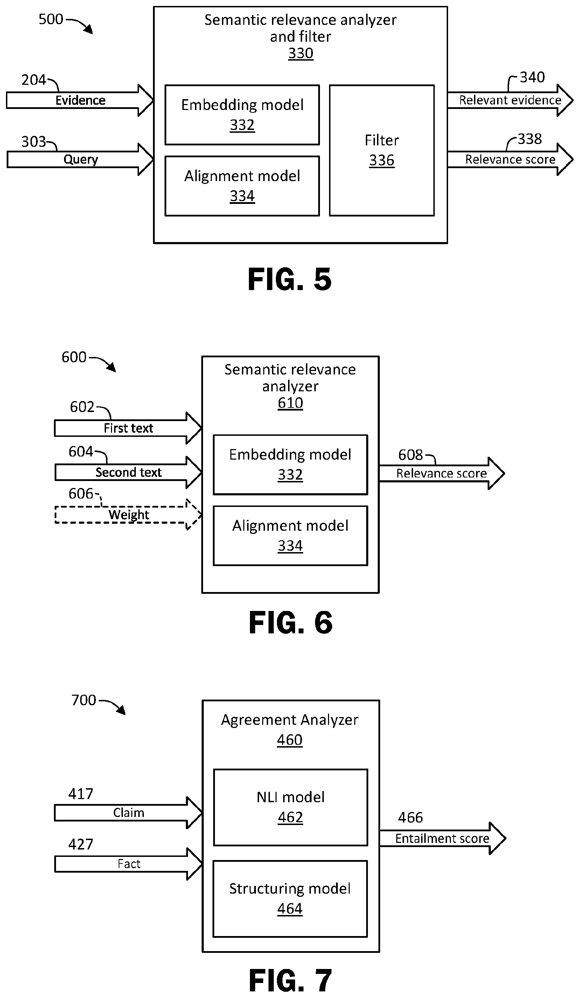

Semantic relevance analyzer and filter 330 receive documents of evidence 204 and processes each document by determining a relevance score based on how relevant that document is with query 303. FIG. 5 shows a schematic diagram 500 illustrating by way of example semantic relevance analyzer and filter 330. Semantic relevance analyzer and filter 330 receives query 303 and evidence 204 and performs semantic analysis using embedding model 332 and alignment model 334 to determine a relevance score between query 303 and each document of evidence 204.

Embedding model 332, shown in FIG. 5, assigns each word as a "dense vector" of real numbers (called "embeddings"). Words that are used in similar contexts or have similar meanings are located near each other in the vector space. Embedding models are trained using machine learning techniques. Transformer based models generate contextualized embeddings that depend on a word's context in a sentence, which provide a more nuanced understanding of language. By training an embedding model on a particular set of documents within a particular knowledge domain, a domain-specific embedding model can be developed. Such domain-specific embedding models are available in diverse fields such as medicine and law and have been shown to significantly enhance the accuracy of relevance scores when used appropriately.

Alignment model 334 maps elements, such as a word, phrase, or sentence, or paragraph of a document from evidence 204 to elements of query 303 that have similar meanings. Once the embeddings are generated by embedding model 332, they are aligned by alignment model 334. With the elements being aligned, the similarities of the embeddings are computing using a metric such as cosine similarity or dot product. The overall similarity between each document and the query is computed as an average or some other aggregation of the individual alignment scores. This process of aligning embeddings is sometimes referred to as "semantic similarity with alignment" or "semantic matching with alignment."

The relevance score calculated by embedding model 332 and alignment model 334 is a measure of the semantic similarity between a document from evidence 204 and query 303. The score is used to filter the documents by removing irrelevant or less relevant documents from evidence 204, resulting in a set of relevant documents 340. The filtering can involve multiple operations. As a first example operation, all documents with a relevance score less than a threshold are dropped. If no documents remain after this operation, then credible sources have no evidence that can be used to answer query 303. An error message may then be sent to user 301 as a result. If a large number of documents remain after the filtering, the documents are ranked according to their relevance score and only a specified number of the top-ranked documents are retained. The selection of the number of documents to be retained may be fixed (e.g., the top twenty documents) or it may relate to the token limit of GAI model 360. In this case, the number of documents to be retained varies depending on how long the documents are. If a particular GAI model being used has a token limit of 8,192 tokens, then only the top number of documents that can be expressed in that number of tokens (minus length of query 303 itself) can be retained. To reduce the likelihood of the length of documents affecting the number of documents to be used, each large document in credible sources database 305 is broken up into a number of smaller documents, in some examples. For example, a book is broken up into individual chapters, or a lengthy article is broken up into separate sections.

Returning to FIG. 3, relevant evidence 340 is provided to GAI querier 350, which appends the relevant evidence to query 303, including an instruction such as, "answer the above question using only the following reference material." This concatenation results in an augmented query. The augmented query is submitted to GAI model 360 and answer 202 is received by GAI querier 350, which passes answer 202 to verifier 400.

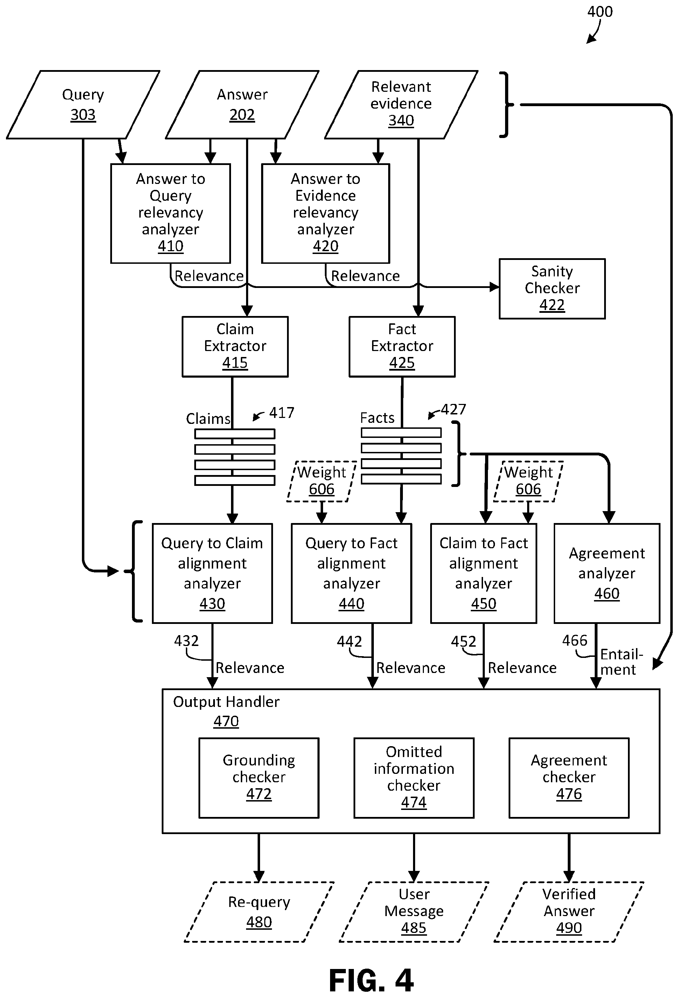

Verifier 400 performs a plurality of processes (described in further detail below with reference to FIG. 4) on the triad of information comprising query 303, relevant evidence 340, and answer 202. Verifier 400 generates as output verified answer or user message 380 which is sent to user interface 310 for presentation to user 301. If verifier 400 determines that the answer is relevant to the query, complete, and in agreement with the relevant evidence 340, then the answer 202 is passed unmodified to user interface 310 for presentation to user 301 in message 380. If verifier 400 detects discrepancies in answer 202, in an implementation, verifier 400 re-queries GAI model 360 by generating a new augmented query 402, instructing GAI model 360 to resolve the discrepancies. In other circumstances, or in different implementations, and depending on the severity of the discrepancies, an error message is sent as user message 380 to user interface 310, or the answer 202 is sent along with a message to user 301 in user message 380 advising user 301 of the discrepancy detected in answer 202.

FIG. 4 shows a schematic diagram of verifier 400 illustrating components thereof and communication paths between the components. Each component may be a software function or routine of a unitary application, or a separately instantiated, scalable service interconnected with other components via application programming interfaces, remote procedure calls, etc. Some components may be combined with other components or divided into sub-components for maintainability, scalability, or fault tolerance. As such, FIG. 4 is presented as an example for explanatory purposes only and should not be viewed as limiting to a particular architecture.

The example information triad, comprising query 303, answer 202, and relevant evidence 340, is received by verifier 400. In a first stage of processing the information triad, sanity checks are performed on the answer 202 to ensure that it is relevant to both query 303 and relevant evidence 340. Answer to query relevancy analyzer 410 determines a relevance score between query 303 and the answer 202. If the relevance score falls below a threshold, then the answer is determined to be not directed to the query 303. Likewise, the answer to evidence relevancy analyzer 420 determines a relevance score between answer 202 and each document of the relevant evidence 340. If the relevance scores determined by analyzer 420 are less than a threshold, then the answer is determined to be insufficiently relevant to the evidence. For example, the answer is a fabrication of GAI model 360.

FIG. 6 shows a semantic representation 600 of a semantic relevance analyzer 610, which operates in a manner consistent with analyzers 410, 420. Semantic relevance analyzer 610 receives first and second text inputs 602, 604. Natural language processors including embedding model 332 and alignment model 334 receive first and second text inputs 602, 604 to determine a relevance score between them as described above with reference to FIG. 5. In some cases, a weight 606 is applied to the relevance score as described in further detail below, but for the purposes of describing operation of analyzers 410, 420, there are no weights that are input into the analyzer and the relevance score 608 is produced indicating a relevance of the first and second texts 602, 604.

Returning to FIG. 4, answer to query relevancy analyzer 410 generates a score that indicates a measure of semantic similarity between answer 202 and query 303. Likewise, answer to evidence relevancy analyzer 420 generates a score that indicates a measure of semantic similarity between answer 202 and relevant evidence 340. In an example implementation, answer to evidence relevancy analyzer 420 generates a separate score for each document of relevance evidence 340 and the highest determined score is used as the relevancy score for evidence 340. Relevancy scores from analyzers 410, 420 are passed to sanity checker 422 for comparing each of the relevancy scores with a respective threshold to ensure, prior to proceeding with additional verifications to ensure that answer 202 is at least related to query 303 and evidence 340.

If the answer passes the above-described sanity checks, verifier 400 proceeds to an alignment stage of processing. In this stage, claim extractor 415 extracts claims 417 from the answer and fact extractor 425 extracts facts 427 from relevant evidence 340. In an implementation, each claim is a sentence extracted from answer 202. It is also possible to further divide compound sentences into separate independent clauses, each independent clause being a claim that expresses a full thought, including a subject and verb. Likewise, each fact is a sentence (or independent clauses) extracted from relevant evidence 340. All sentences making up answer 202 are reflected in claims 417 and all sentences making up relevant evidence 340 are reflected in facts 427.

Alignment analyzers 430, 440, and 450 generate relevance scores 432, 442, and 452, respectively, for a final output stage of processing, which is described in more detail below. In some examples, query to claim alignment analyzer 430 generates relevance score 432 indicating a measure of semantic similarity between each claim 417 and query 303, for use in a later verification operation. Query to fact alignment analyzer 440 generates relevance score 442 indicating a measure of semantic similarity between each fact and query 303. Claim to fact alignment analyzer 450 generates relevance score 452 indicating a measure of semantic similarity between each claim and each fact.

Alignment analyzers 430, 440, and 450 operate in a manner described above with reference to FIG. 6. Query to claim alignment analyzer 430 includes as first text 602, claims 417, and as second text 604, query 303. The labels "first" and "second" are used herein only for purposes of distinguishing one from the other, not to impose an ordering. In query to fact alignment analyzer 440, query 303 as first text 602 and a fact 427 as second text 604. In addition, a weight 606 can be applied to the relevance score. The application of weight 606 can be implemented as a simple multiplication of an initial score with the weight to arrive at relevance score 608. So, for scores and weights that range from zero to one, scores with higher weights can be elevated over similar scores with lower weights. In another implementation, other heuristic mechanisms are used to apply weights to scores to enhance or diminish the impact of each weight 606. In query to fact alignment analyzer 440, the weight, in an implementation, is the relevance score 338 for the document from which the fact was extracted. Relevance score 338 indicates a relevancy of the document to the query. Query to fact alignment analyzer 440, in an implementation, applies relevance score 338 to an initial relevance score between the query and each fact to elevate the value of facts extracted from documents that are considered to be highly relevant to query 303. Other methods of weighting facts and/or claims can be implemented in a heuristic manner to improve the overall assessment of the relevancy between claims 417 and query 303 and between facts 427 and query 303.

Claim to fact alignment analyzer 450 tests each claim against each fact to determine a relevance score therebetween. Claim to fact analyzer 450 may also apply weights 606 such as relevance score 338 to elevate facts derived from documents that are considered to be highly relevant to query 303. Since a relevance score 452 is generated for each claim-to-fact pair, a large number of relevance scores 452 may be generated. For example, if an answer has 20 sentences, and the relevant evidence 340 has 2,000 sentences, then there are 40,000 relevance scores 452 determined by claim to fact alignment analyzer 450.

Agreement analyzer 460 determines an entailment score 466 for each claim-to-fact pair. FIG. 7 shows a schematic representation of an exemplary agreement analyzer 460. As shown, agreement analyzer 460 employes a NLI model 462 and a structuring model 464 to determine entailment score 466. NLI models and structuring models such as NLI model 462 and structuring model 464 are known in the field of natural language processing. In one example, NLI model 462 is a machine learning model designed to determine the relationship between two pieces of text, referred to as the premise and the hypothesis. The hypothesis is entailed by the premise if it logically follows the premise. The hypothesis contradicts the premise if it can not be true if the premise is taken as true. The NLI may determine that there is no logical relationship between the premise and the hypothesis. The score generated by the NLI model varies based on how the model was trained or developed, but in an example, an entailment score close to one indicates strong entailment, a score around zero indicates neutrality, and a score close to negative one indicates strong contradiction.

Structuring model 464 is designed to analyze and organize internal structure of an individual text into interpretable components to capture underlying grammar, meaning, or relationships between words in the sentence. Structuring model 464 is specialized for a particular knowledge domain, such as medicine, law, finance, and/or scientific research, which allows NLI model 462 to better interpret jargon, abbreviations, and specific meanings associated with one or more fields. Structuring model 464 can be used to pre-process claims and facts before NLI model 462 compares them. With terms (e.g., medical terms) properly classified by structuring model 464, NLI can more accurately determine entailment score 466. In some examples, NLI model 462 is a component of agreement analyzer 460. The NLI model generates the entailment score, and that is also the output from agreement analyzer 460.

Once relevance scores 432, 442 and 452 are determined and entailment scores 466 are determined, the verifier 400 proceeds to a stage of processing wherein all the outputs including the information triad, the relevance scores, and the entailments scores are interpreted to generate an output comprising a re-query 480, a user message 485, and/or a verified answer 490. Output handler 470 performs a series of checks using grounding checker 472, omitted information checker 474, and agreement checker 476 on the relevance and entailment scores. Claim to fact alignment analyzer 450 generates relevancy scores. Grounding checker 472 uses the relevancy scores to make sure that the answer is grounded. For example, grounding checker 472 checks whether every claim 417 of answer 202 is relevant to at least one fact 427. Omitted information checker 474 checks whether there are any facts 427 determined to be relevant to query 303 that are not relevant to any claim 417. Agreement checker 476 checks whether every claim 417 is entailed by at least one fact 427 and is not contradicted by any fact 427. If answer 202 passes all these checks, then verified answer 490, which is a copy of answer 202, is supplied to user interface 310 for presentation to user 301.

If any of the checks fail, then, depending on implantation details or configuration, a re-query 480 is generated for submission to GAI querier 350 as previously described and/or a user message 485 is generated advising user 301 of a failure of the GAI model 360. In an embodiment, such as cases where an answer is largely determined to be okay but some discrepancy exists (e.g., certain information is omitted or a particular claim is not entailed by the facts), then user message 485 is generated that includes answer 202 and a qualifying message advising user 301 of the discrepancy.

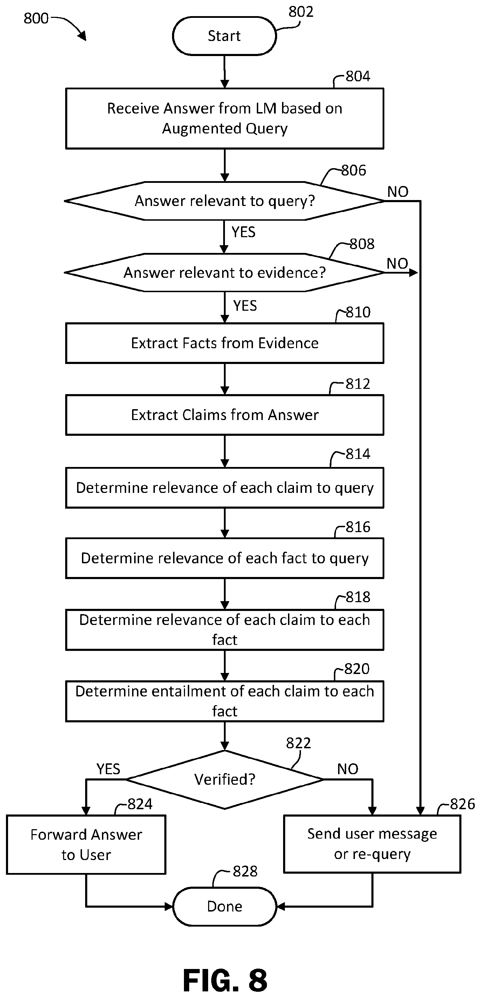

FIG. 8 shows a flowchart 800 illustrating by way of example a procedure performed by verifier 400. The procedure begins as indicated by start block 802 and proceeds to operation 804 wherein an answer is received from a GAI model based on an augmented query using retrieval augmented generation. At 806, it is determined whether answer 202 is relevant to query 303. In an implementation, a relevancy score determined by answer to query relevancy analyzer 410 is compared to a threshold to determine whether answer 202 is sufficiently related to query 303 to be determined relevant. If the answer 202 is determined to be unrelated to query 303, the procedure flows to operation 826 wherein a failure notice is sent as a message to user, or GAI model 360 is re-queried. If answer 202 is determined to be relevant to query 303, the procedure flows to operation 808.

In operation 808, verifier 400 determines whether answer 202 is relevant to relevant evidence 340. If not, the procedure flows to operation 826 which generates a user notification as previously described. If the answer is relevant to the evidence, the procedure flows to operation 810.

In operation 810 verifier 400 extracts facts 427 from relevant evidence 340. In an exemplary implementation, facts 427 are extracted using fact extractor 425 previously described. In operation 812, claims 417 are extracted from answer 202. In an exemplary implementation, claims 417 are extracted from answer 202 using claim extractor 415 previously described.

In operation 814, verifier 400 generates a relevance score 432 for each claim. Relevance score 432 is generated by query to claim alignment analyzer 430 indicating a confidence by analyzer 430 that the corresponding claim 417 is relevant to query 303.

In operation 816, verifier 400 generates a relevance score 442 for each fact. Relevance score 442 is generated by query to fact alignment analyzer 440 and indicates a confidence by analyzer 440 that the corresponding fact is relevant to query 303.

In operation 818, verifier 400 generates a relevance score 452 for each claim-to-fact pair. Relevance score 452 is generated by claim to fact alignment analyzer 450 and indicates a confidence by analyzer 450 that the corresponding fact is relevant to the corresponding claim.

In operation 820, verifier 400 generates an entailment score 466 for each claim-to-fact pair. Entailment score 466 is generated by agreement analyzer 460 and indicates a level of confidence that the corresponding claim is entailed (e.g., if positive) or contradicted (e.g., if negative) by the corresponding fact.

In operation 822, verifier checks the outputs including the relevance scores and the entailment scores to verify the relevancy, completeness, and correctness of answer 202. If the checks result in verification of answer 202, the procedure flows to operation 824 wherein answer 202 is forwarded (as a verified answer) to user interface 310 for presentation to user 301. The procedure ends as indicated by block 828. If answer is determined at operation 822 to be not verified, the procedure flows to operation 826, wherein a user message or re-query is generated as previously described. The procedure ends as indicated by block 828.

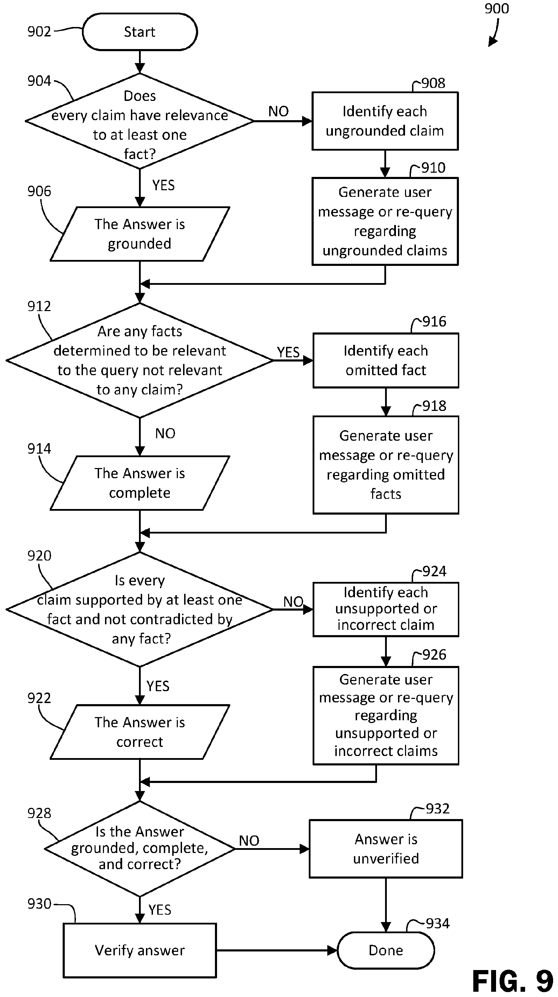

FIG. 9 shows flow chart 900 illustrating by way of example a procedure to determine, at block 822, whether answer is verified or not. The procedure begins as indicated by start block 902 and flows to operation 904 wherein verifier 400 determines whether every claim has relevance to at least one fact. As mentioned previously, claim to fact analyzer 450 determines a relevance score for every claim-to-fact pair. Therefore, each claim 417 is associated with a plurality of relevance scores 452 that relate to how relevant that claim is to each fact 427. In an exemplary implementation, each of these relevance scores are compared to a threshold value and if at least one of these relevance scores exceeds the threshold value, the claim is relevant to at least the one fact that corresponds to the one relevance score. All claims are tested in this manner to determine that each claim is relevant to at least one fact. If this is determined to be true, the answer is determined to be grounded as indicated by data block 906 and the procedure flows to operation 912. If not, the operation flows to operation 908 wherein each ungrounded claim is identified. Each ungrounded claim is a claim that is not relevant to at least one fact. In operation 910, a user message or re-query prompt is generated regarding the ungrounded claims, and the procedure flows to operation 912.

In operation 912, verifier 400 determines whether any facts that are determined to be relevant to the query are not relevant to any one claim. In this operation, all facts 427 are filtered based on relevance score 442 to identify only those facts 427 that are determined to be relevant to query 303. Each of the filtered set of facts 427 have a corresponding set of relevance scores 452, each associated with one of claims 417. If all the filtered set of facts has at least one corresponding claim-to-fact relevancy score 452 that exceeds a threshold value, the procedure flows to data block 914 indicating that the answer is complete, and the operation flows to operation 920. Otherwise, the procedure flows to operation 916 wherein an omitted fact is identified. The omitted fact (or facts) includes any fact that is determined to be relevant to the query, but has no corresponding claim-to-fact relevance score that exceeds the threshold. The procedure flows to operation 918 wherein a user message or re-query is generated regarding the omitted fact or facts, and the procedure flows to operation 920.

In operation 920, verifier 400 determines whether every claim is supported by at least one fact and is not contradicted by any fact. In this operation, the plurality of entailment scores associated with each claim are evaluated against a first threshold and a second threshold. If any entailment score indicates a contradiction between the claim and one of the facts, the lack of agreement is determined. It is also required that every claim be in agreement with at least one fact. In an exemplary embodiment, each entailment score for each claim is evaluated in series. In this manner, it is ensured that at least one of the entailment scores for that claim exceeds a threshold indicating it is an entailment of at least one fact, and any facts that contradict the claim are identified. If no contradictions exist and at least one fact entails the claim, the procedure flows to data block 922 indicating that the answer is correct and then the operation flows to operation 928. In this case, "correct" means that every claim is consistent with the evidence. If a claim is not supported by any of the facts or is in contradiction to any one or more facts, the procedure flows to operation 924 wherein each unsupported or incorrect claim is identified. The procedure flows to operation 926 wherein a user message or re-query is generated regarding the unsupported or incorrect claim. The procedure flows to operation 928.

In operation 928, it is determined whether the answer is grounded, complete, and correct. If so, then the answer is verified as indicated by operation 930, and the procedure ends as indicated by block 934. If not, the procedure flows to operation 932 wherein the answer is unverified and the user message or re-query is performed as indicated by operation 826 in FIG. 8.

### Additional Examples

An exemplary system comprises a processor and a memory, the memory embodying instructions executable by one the at least one processor, the instructions causing the at least one processor to perform a method for verifying an answer generated by a GAI model according to an augmented query, the augmented query comprising a query submitted by a user and a request to answer the query using only provided evidence determined to be relevant to the query. The method comprises: receiving the answer from the GAI model; responsive to determining that the answer is not relevant to the query or to determining that the answer is not relevant to the evidence, performing one of providing a notification to a user indicating a verification failure; responsive to determining that the answer is relevant to both the query and the evidence, performing additional verification checks, the additional verification checks comprising: extracting a fact from the evidence, the fact being a segment of the evidence; extracting a claim from the answer, the claim being a segment of the answer; determining a claim-to-fact entailment score by an agreement analyzer comprising a natural language inference (NLI) model; verifying the answer based at least in part on a check of the claim-to-fact entailment score; and based on the verifying, providing the answer to the user as a verified answer, providing a qualified answer including discrepancy information generated by the verifying, or generating a new augmented query based on the augmented query and the discrepancy information.

Alternatively, or in addition to the other examples described herein, examples include any combination of the following:
- Wherein the NLI model comprises a structuring model that is trained to be specific to a knowledge domain, the knowledge domain being medical science.
- Wherein the fact is one of a plurality of facts extracted from the evidence, the claim is one of a plurality of claims extracted from the evidence, and the check comprises determining whether the claim is entailed by at least one of the facts and none of the claims are contradicted by any of the facts.
- Wherein the evidence comprises a document, and the providing of the answer to the user further comprises providing a citation to the document, the citation being a location in the document corresponding to the fact.
- Wherein the method further comprises: determining a claim-to-fact relevance score by an alignment analyzer comprising a natural language model; and wherein the verifying further comprises a second check, the second check comprising determining whether the claim is relevant to the fact.
- Wherein the fact is one of a plurality of facts extracted from the evidence, the claim is one of a plurality of claims extracted from the evidence, and wherein the method further comprises: determining a fact-to-query relevance score corresponding using fact-to-query alignment analyzer, the fact-to-query relevance score indicating a degree of confidence by the fact-to-query alignment analyzer that a respective fact is relevant to the query; and wherein the verifying further comprises a third check, the third check comprising determining whether the answer is complete by determining whether any of the facts that are determined to be relevant to the query are not relevant to any one of the claims.

In another example, a computer-implemented method verifies an answer generated by a GAI model according to an augmented query, the augmented query comprising a query submitted by a user and a request to answer the query using only provided evidence determined to be relevant to the query. The method comprising: receiving the answer from the GAI model; responsive to determining that the answer is not relevant to the query or to determining that the answer is not relevant to the evidence, performing one of providing a notification to a user indicating a verification failure; responsive to determining that the answer is relevant to both the query and the evidence, performing additional verification checks, the additional verification checks comprising: extracting a fact from the evidence, the fact being a segment of the evidence; extracting a claim from the answer, the claim being a segment of the answer; determining a claim-to-fact entailment score using an agreement analyzer comprising a natural language inference (NLI) model; verifying the answer based at least in part on a check entailment score; and based on the verifying, providing the answer to the user as a verified answer, providing a qualified answer including discrepancy information generated by the verifying, or generating a new augmented query based on the augmented query and the discrepancy information.

Alternatively, or in addition to the other examples described herein, examples include any combination of the following:
- Wherein the NLI model comprises a structuring model that is trained to be specific to a particular knowledge domain.
- Wherein the particular knowledge domain is medical science.
- Wherein the fact is one of a plurality of facts extracted from the evidence, the claim is one of a plurality of claims extracted from the evidence, and the check comprises determining whether every claim is entailed by at least one fact and none of the claims are contradicted by any fact.
- Wherein the evidence comprises a document, and the providing of the answer to the user further comprises providing a citation to the document, the citation being a location in the documents corresponding to the fact.
- Wherein the method further comprises: determining a claim-to-fact relevance score using an fact-to-claim alignment analyzer comprising a natural language model; and wherein the verifying further comprises a second check, the second check comprising determining the claim is relevant to the fact.
- Wherein the fact is one of a plurality of facts extracted from the evidence, the claim is one of a plurality of claims extracted from the evidence, wherein the fact-to-claim alignment analyzer determines a relevance score for each fact-to-claim pairing, and wherein the method further comprises: determining a plurality of fact-to-query relevance scores corresponding to respective fact-to-query pairings, the fact-to-query relevance scores being determined by a fact-to-query alignment analyzer and indicating a degree of confidence by the fact-to-query alignment analyzer that a corresponding fact is relevant to the query; and wherein the verifying further comprises a third check, the third check comprising determining whether the answer is complete by determining whether any of the facts that are determined to be relevant to the query are not relevant to any of the claims.

In another example, a computer storage medium embodies instructions executable by a processor, the instructions causing the processor to perform a method for verifying an answer generated by a GAI model based on an augmented query, the augmented query comprising a query submitted by a user and a request to answer the query using provided evidence determined to be relevant to the query, the method comprising: receiving the answer from the GAI model; responsive to determining that the answer is not relevant to the query or to determining that the answer is not relevant to the evidence, providing a notification to a user indicating a verification failure; responsive to determining that the answer is relevant to both the query and the evidence, performing additional verification checks, the additional verification checks comprising: extracting facts from the evidence, each fact being a segment of the evidence; extracting claims from the answer, each claim being a segment of the answer; determining a plurality of claim-to-fact entailment scores corresponding to each of respective claim-to-fact pairings, the claim-to-fact entailment scores being determined by an agreement analyzer comprising a natural language inference (NLI) model; and verifying the answer based on a check of the plurality of claim-to-fact entailment scores; and based on the verifying, providing the answer to the user as a verified answer, providing a qualified answer including providing discrepancy information generated by the verifying, or generating another augmented query based on the augmented query and the discrepancy information.
- Wherein the NLI model comprises a structuring model that is trained to be specific to a particular knowledge domain.
- Wherein the particular knowledge domain is medical science.
- Wherein the check comprises determining whether every claim is entailed by at least one fact and none of the claims are contradicted by any fact.
- Wherein the evidence comprises a document, and the providing of the answer to the user further comprises providing a to the document, the citation being a location in the documents corresponding to a fact that entails a respective claim.
- Wherein the method further comprises: determining a plurality of claim-to-fact relevance scores corresponding to each respective claim-to-fact pairing, the claim-to-fact relevance scores being determined by a claim-to-fact alignment analyzer comprising an embedding model; and wherein the verifying further comprises a second check, the second check comprising determining whether every claim is relevant to at least one fact.
- Wherein the method further comprises: determining a plurality of fact-to-query relevance scores corresponding to respective fact-to-query pairings, the fact-to-query relevance scores being determined by a fact-to-query alignment analyzer and indicating a degree of confidence by the fact-to-query alignment analyzer that a corresponding fact is relevant to the query; and wherein the verifying further comprises a third check, the third check comprising determining whether the answer is complete by determining whether one of the facts that is determined to be relevant to the query is not relevant to one of the claims.

### Example Operating Environment

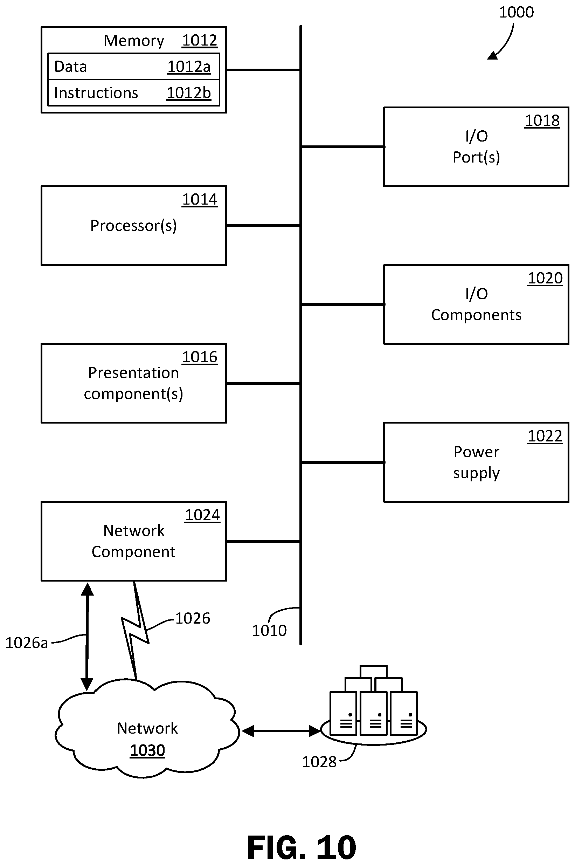

FIG. 10 is a block diagram of an example computing device 1000 for implementing aspects disclosed herein and is designated generally as computing device 1000. In some examples, one or more computing devices 1000 are provided for an on-premises computing solution. In some examples, one or more computing devices 1000 are provided as a cloud computing solution. In some examples, a combination of on-premises and cloud computing solutions are used. Computing device 1000 is but one example of a suitable computing environment and is not intended to suggest any limitation as to the scope of use or functionality of the examples disclosed herein, whether used singly or as part of a larger set. Neither should computing device 1000 be interpreted as having any dependency or requirement relating to any one or combination of components/modules illustrated. The examples disclosed herein can be described in the general context of computer code or machine-useable instructions, including computer-executable instructions such as program components, being executed by a computer or other machine, such as a mobile phone or other handheld device. Generally, program components including routines, programs, objects, components, data structures, and the like, refer to code that performs particular tasks, or implement particular data types. The disclosed examples can be practiced in a variety of system configurations, including server computers, virtual machines, personal computers, laptops, smart phones, mobile tablets, hand-held devices, consumer electronics, specialty computing devices, etc. The disclosed examples can also be practiced in distributed computing environments when tasks are performed by remote-processing devices that are linked through a communications network.

Computing device 1000 includes a bus 1010 that directly or indirectly couples the following devices: computer storage memory 1012, one or more processors 1014, one or more presentation components 1016, input/output (I/O) ports 1018, I/O components 1020, a power supply 1022, and a network component 1024. While computing device 1000 is depicted as a seemingly single device, multiple computing devices 1000 can work together and share the depicted device resources. As such, in certain examples, memory 1012 is distributed across multiple devices, and processor(s) 1014 is housed with different devices.

Bus 1010 represents one or more buses (such as an address bus, data bus, or a combination thereof). Although the various blocks of FIG. 6 are shown with lines for the sake of clarity, delineating various components can be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 6 and the references herein to a "computing device." Memory 1012 can take the form of the computer storage media referenced below and operatively provide storage of computer-readable instructions, data structures, program modules and other data for the computing device 1000. In some examples, memory 1012 stores one or more of an operating system, a universal application platform, or other program modules and program data. Memory 1012 is thus able to store and access data 1012a and instructions 1012b that are executable by processor 1014 and configured to carry out the various operations disclosed herein.

In some examples, memory 1012 includes computer storage media. Memory 1012 can include any quantity of memory associated with or accessible by the computing device 1000. Memory 1012 can be internal to the computing device 1000 (as shown in FIG. 6), external to the computing device 1000 (not shown), or both (not shown). Additionally, or alternatively, the memory 1012 can be distributed across multiple computing devices 1000, for example, in a virtualized environment in which instruction processing is carried out on multiple computing devices 1000. For the purposes of this disclosure, "computer storage media," "computer-storage memory," "memory," and "memory devices" are synonymous terms for the computer-storage memory 1012, and none of these terms include carrier waves or propagating signaling. Computer storage media is therefore non-transitory.

Processor(s) 1014 includes any quantity of processing units that read data from various entities, such as memory 1012 or I/O components 1020. Specifically, processor(s) 1014 are programmed to execute computer-executable instructions for implementing aspects of the disclosure. The instructions can be performed by the processor, by multiple processors within the computing device 1000, or by a processor external to the client computing device 1000. In some examples, the processor(s) 1014 are programmed to execute instructions such as those illustrated in the flow charts discussed below and depicted in the accompanying drawings. Moreover, in some examples, processor(s) 1014 represent an implementation of analog techniques to perform the operations described herein. For example, the operations are performed by an analog client computing device 1000 and/or a digital client computing device 1000. Presentation component(s) 1016 present data indications to a user or other device. Exemplary presentation components include a display device, speaker, printing component, vibrating component, etc. It should be understood that computer data can be presented in a number of ways, such as visually in a graphical user interface (GUI), audibly through speakers, wirelessly between computing devices 1000, across a wired connection, or in other ways. I/O ports 1018 allow computing device 1000 to be logically coupled to other devices including I/O components 1020, some of which can be built in. Example I/O components 1020 include, for example but without limitation, a microphone, joystick, game pad, satellite dish, scanner, printer, wireless device, etc.

Computing device 1000 can operate in a networked environment via the network component 1024 using logical connections to one or more remote computers. In some examples, the network component 1024 includes a network interface card and/or computer-executable instructions (e.g., a driver) for operating the network interface card. Communication between the computing device 1000 and other devices can use any protocol or mechanism over any wired or wireless connection. In some examples, network component 1024 is operable to communicate data over public, private, or hybrid (public and private) using a transfer protocol, between devices wirelessly using short range communication technologies (e.g., near-field communication (NFC), Bluetooth^{®} branded communications, or the like), or a combination thereof. Network component 1024 communicates over wireless communication link 1026 and/or a wired communication link 1026a to a remote resource 1028 (e.g., a cloud resource) across network 1030. Various different examples of communication links 1026 and 1026a include a wireless connection, a wired connection, and/or a dedicated link, and in some examples, at least a portion is routed through the internet.

Although described in connection with an example computing device 1000, examples of the disclosure are capable of implementation with numerous other general-purpose or special-purpose computing system environments, configurations, or devices. Examples of well-known computing systems, environments, and/or configurations that suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic device, and the like. Such systems or devices might accept input from the user in any way, including from input devices such as a keyboard or pointing device, via gesture input, proximity input (such as by hovering), and/or via voice input.

Examples are described in the general context of computer-executable instructions, such as program modules, executed by one or more computers or other devices in software, firmware, hardware, or a combination thereof. The computer-executable instructions can be organized into one or more computer-executable components or modules. Generally, program modules include, but are not limited to, routines, programs, objects, components, and data structures that perform particular tasks or implement particular abstract data types. Aspects of the disclosure can be implemented with any number and organization of such components or modules. For example, aspects of the disclosure are not limited to the specific computer-executable instructions or the specific components or modules illustrated in the figures and described herein. Other examples of the disclosure include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium for storing information for access by a computing device. In contrast, communication media typically embody computer readable instructions, data structures, program modules, or the like in a modulated data signal such as a carrier wave or other transport mechanism and include any information delivery media.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

In examples involving a general-purpose computer, aspects of the disclosure transform the general-purpose computer into a special-purpose computing device when configured to execute the instructions described herein.

It will be understood that the benefits and advantages described above can relate to one embodiment or to several embodiments. The embodiments are not limited to those that solve any or all of the stated problems or those that have any or all of the stated benefits and advantages. It will further be understood that reference to 'an' item refers to one or more of those items.

The term "comprising" is used in this specification to mean including the feature(s) or act(s) followed thereafter, without excluding the presence of one or more additional features or acts.

In some examples, the operations illustrated in the figures are implemented as software instructions encoded on a computer storage medium, in hardware programmed or designed to perform the operations, or both. For example, aspects of the disclosure are implemented as a system on a chip or other circuitry including a plurality of interconnected, electrically conductive elements.

The order of execution or performance of the operations in examples of the disclosure illustrated and described herein is not essential, unless otherwise specified. That is, the operations can be performed in any order, unless otherwise specified, and examples of the disclosure can include additional or fewer operations than those disclosed herein. For example, it is contemplated that executing or performing a particular operation before, contemporaneously with, or after another operation is within the scope of aspects of the disclosure.

As used herein, the term "set" is non-empty, and can also be referred to as a "group."

When introducing elements of aspects of the disclosure or the examples thereof, the articles "a," "an," "the," and "said" are intended to mean that there are one or more of the elements. The terms "comprising," "including," and "having" are intended to be inclusive and mean that there might be additional elements other than the listed elements. The term "exemplary" is intended to mean "an example of." The phrase "one or more of the following: A, B, and C" means "at least one of A and/or at least one of B and/or at least one of C."

While the aspects of the disclosure have been described in terms of various examples with their associated operations, a person skilled in the art would appreciate that a combination of operations from any number of different examples is also within scope of the aspects of the disclosure.

An exemplary implementation verifies an answer generated by a generative artificial intelligence model. The answer is responsive to an augmented query. The augmented query comprises a query submitted by a user and a request to answer the query using evidence determined to be relevant to the query. The answer is verified to be relevant to both the query and the evidence, facts are extracted from the evidence, and claims are extracted from the answer. Claim-to-fact entailment scores corresponding to each of the respective claim-to-fact pairings are determined. The scores are determined by an agreement analyzer comprising a natural language inference model. The answer is verified based on a check of the scores. A verified answer, a qualified answer, and/or a failure message is communicated to the user based on the verification.

In an example, there is provided a system comprising a processor and a memory, the memory embodying instructions executable by the processor, the instructions causing the processor to execute the instructions to: receive an answer generated by a generative artificial intelligence (GAI) model based on an augmented query, the augmented query comprising a query from a user and a request to answer the query using only evidence determined to be relevant to the query; based on determining that the answer is relevant to both the query and the evidence, perform additional verification checks, the additional verification checks comprising: extracting a fact from the evidence, the fact being a segment of the evidence, extracting a claim from the answer, the claim being a segment of the answer, determining a claim-to-fact entailment score by an agreement analyzer comprising a natural language inference (NLI) model, and verifying the answer based at least in part on a check of the claim-to-fact entailment score; and based on the verifying, (i) provide the answer to the user as a verified answer, (ii) provide a qualified answer including discrepancy information generated by the verifying, or (iii) generate a new augmented query based on the augmented query and the discrepancy information.

In an example, the NLI model comprises a structuring model that is trained to be specific to a knowledge domain, the knowledge domain being medical science.

In an example, the fact is one of a plurality of facts extracted from the evidence, the claim is one of a plurality of claims extracted from the evidence, and the check comprises determining whether the claim is entailed by at least one of the facts and none of the claims are contradicted by any of the facts.

In an example, the evidence comprises a document, and the providing of the answer to the user further comprises providing a citation to the document, the citation being a location in the document corresponding to the fact.

In an example, the instructions further comprise: determining a claim-to-fact relevance score by an alignment analyzer comprising a natural language model; and wherein the verifying further comprises a second check, the second check comprising determining whether the claim is relevant to the fact.

In an example, the fact is one of a plurality of facts extracted from the evidence, the claim is one of a plurality of claims extracted from the evidence, and wherein the instructions further comprise: determining a fact-to-query relevance score corresponding using fact-to-query alignment analyzer, the fact-to-query relevance score indicating a degree of confidence by the fact-to-query alignment analyzer that a respective fact is relevant to the query; and wherein the verifying further comprises a third check, the third check comprising determining whether the answer is complete by determining whether any of the facts that are determined to be relevant to the query are not relevant to any one of the claims.

In an example, there is provided a computer-implemented method comprising: receiving an answer generated by a generative artificial intelligence (GAI) model based on an augmented query, the augmented query comprising a query from a user and a request to answer the query using only evidence determined to be relevant to the query; verifying the answer, the verifying comprising: extracting a fact from the evidence, the fact being a segment of the evidence, extracting a claim from the answer, the claim being a segment of the answer, determining a claim-to-fact entailment score using an agreement analyzer comprising a natural language inference (NLI) model, and verifying the answer based at least in part on a check entailment score; and based on the verifying, (i) providing the answer to the user as a verified answer, (ii) providing a qualified answer including discrepancy information generated by the verifying, or (iii) generating a new augmented query based on the augmented query and the discrepancy information.

In an example, the NLI model comprises a structuring model that is trained to be specific to a particular knowledge domain, the knowledge domain being medical science.

In an example, the method further comprises: responsive to determining that the answer is not relevant to the query or to determining that the answer is not relevant to the evidence, performing one of providing a notification to a user indicating a verification failure without performing the verifying; responsive to determining that the answer is relevant to the query or to determining that the answer is relevant to the evidence, performing the verifying.

In an example, the fact is one of a plurality of facts extracted from the evidence, the claim is one of a plurality of claims extracted from the evidence, and the verifying comprises determining whether every claim is entailed by at least one fact and none of the claims are contradicted by any fact.

In an example, the evidence comprises a document, and the providing of the answer to the user further comprises providing a citation to the document, the citation being a location in the documents corresponding to the fact.

In an example, the method further comprises: determining a claim-to-fact relevance score using an fact-to-claim alignment analyzer comprising a natural language model; and wherein the verifying further comprises a second check, the second check comprising determining the claim is relevant to the fact.

In an example, the fact is one of a plurality of facts extracted from the evidence, the claim is one of a plurality of claims extracted from the evidence, wherein the fact-to-claim alignment analyzer determines a relevance score for each fact-to-claim pairing, and further comprising: determining a plurality of fact-to-query relevance scores corresponding to respective fact-to-query pairings, the fact-to-query relevance scores being determined by a fact-to-query alignment analyzer and indicating a degree of confidence by the fact-to-query alignment analyzer that a corresponding fact is relevant to the query; and wherein the verifying further comprises determining whether the answer is complete by determining whether any of the facts that are determined to be relevant to the query are not relevant to any of the claims.

In an example, there is provided a computer storage medium embodying instructions executable by a processor, the instructions causing the processor to execute the instructions to perform: receiving an answer generated by a generative artificial intelligence (GAI) model based on an augmented query, the augmented query comprising a query from a user and a request to answer the query using evidence determined to be relevant to the query; based on determining that the answer is relevant to both the query and the evidence, performing additional verification checks, the additional verification checks comprising: extracting facts from the evidence, each fact being a segment of the evidence, extracting claims from the answer, each claim being a segment of the answer, determining a plurality of claim-to-fact entailment scores corresponding to each of respective claim-to-fact pairings, the claim-to-fact entailment scores being determined by an agreement analyzer comprising a natural language inference (NLI) model, and verifying the answer based on a check of the plurality of claim-to-fact entailment scores; and based on the verifying, (i) providing the answer to the user as a verified answer, (ii) providing a qualified answer including providing discrepancy information generated by the verifying, or (iii) generating another augmented query based on the augmented query and the discrepancy information.

In an example, the NLI model comprises a structuring model that is trained to be specific to a particular knowledge domain.

In an example, the particular knowledge domain is medical science.

In an example, the check comprises determining whether every claim is entailed by a fact and none of the claims are contradicted by any fact.

In an example, the evidence comprises a document, and the providing of the answer to the user further comprises providing a citation to the document, the citation being a location in the documents corresponding to a fact that entails a respective claim.

In an example, the instructions further comprise: determining a plurality of claim-to-fact relevance scores corresponding to each respective claim-to-fact pairing, the claim-to-fact relevance scores being determined by a claim-to-fact alignment analyzer comprising an embedding model; and wherein the verifying further comprises a second check, the second check comprising determining whether every claim is relevant to at least one fact.

In an example, the instructions further comprise: determining a plurality of fact-to-query relevance scores corresponding to respective fact-to-query pairings, the fact-to-query relevance scores being determined by a fact-to-query alignment analyzer and indicating a degree of confidence by the fact-to-query alignment analyzer that a corresponding fact is relevant to the query; and wherein the verifying further comprises a third check, the third check comprising determining whether the answer is complete by determining whether one of the facts that is determined to be relevant to the query is not relevant to one of the claims.

## Claims

1. A system (400) comprising a processor (1014) and a memory (1012), the memory (1012) embodying instructions executable by the processor (1014), the instructions causing the processor (1014) to execute the instructions to:
receive (804) an answer (202) generated by a generative artificial intelligence (GAI) model (360) based on an augmented query, the augmented query comprising a query (303) from a user (301) and a request to answer the query (303) using only evidence (340) determined to be relevant to the query (303);
based on determining (806, 808) that the answer (202) is relevant to both the query (303) and the evidence (340), perform additional verification checks, the additional verification checks comprising:
extracting (810) a fact (427) from the evidence (340), the fact (427) being a segment of the evidence (340),
extracting (812) a claim (417) from the answer (202), the claim (417) being a segment of the answer (202),
determining (820) a claim-to-fact entailment score (466) by an agreement analyzer (460) comprising a natural language inference (NLI) model (462), and
verifying (822) the answer (202) based at least in part on a check (920) of the claim-to-fact entailment score (466); and
based on the verifying (822), (i) provide (824) the answer (202) to the user (301) as a verified answer (490), (ii) provide (826) a qualified answer (485) including discrepancy information generated by the verifying (822), or (iii) generate (826) a new augmented query (480) based on the augmented query and the discrepancy information.

2. The system (400) of claim 1, wherein the fact (427) is one of a plurality of facts (427) extracted from the evidence (340), the claim (417) is one of a plurality of claims (417) extracted from the evidence (340), and the check (920) comprises determining whether the claim (417) is entailed by at least one of the facts (427) and none of the claims (417) are contradicted by any of the facts (427).

3. The system (400) of claim 2, wherein the evidence (340) comprises a document, and the providing (824) of the answer (202) to the user (301) further comprises providing a citation to the document, the citation being a location in the document corresponding to the fact (427).

4. The system (400) of claim 1, wherein the instructions further comprise:
determining a claim-to-fact relevance score (452) by an alignment analyzer (450) comprising a natural language model (332); and
wherein the verifying further comprises a second check (904), the second check (904) comprising determining whether the claim (417) is relevant to the fact (427).

5. The system (400) of claim 4, wherein the fact (427) is one of a plurality of facts (427) extracted from the evidence (340), the claim (417) is one of a plurality of claims (417) extracted from the evidence (340), and wherein the instructions further comprise:
determining a fact-to-query relevance score (442) corresponding using fact-to-query alignment analyzer (440), the fact-to-query relevance score (442) indicating a degree of confidence by the fact-to-query alignment analyzer (440) that a respective fact (427) is relevant to the query (303); and
wherein the verifying (822) further comprises a third check (912), the third check (912) comprising determining whether the answer (202) is complete by determining whether any of the facts (427) that are determined to be relevant to the query (303) are not relevant to any one of the claims (417).

6. A computer-implemented method comprising:
receiving an answer (202) generated by a generative artificial intelligence (GAI) model (360) based on an augmented query, the augmented query comprising a query (303) from a user (301) and a request to answer the query (303) using only evidence (340) determined to be relevant to the query (303);
verifying (800) the answer (202), the verifying (800) comprising:
extracting (810) a fact (427) from the evidence (340), the fact (427) being a segment of the evidence (340),
extracting (812) a claim (417) from the answer (202), the claim (417) being a segment of the answer (202),
determining a claim-to-fact entailment score (466) using an agreement analyzer (460) comprising a natural language inference (NLI) model, and
verifying (822) the answer (202) based at least in part on a check entailment score (466); and
based on the verifying (822), (i) providing the answer (202) to the user (301) as a verified answer (490), (ii) providing a qualified answer including discrepancy information generated by the verifying (822), or (iii) generating a new augmented query based on the augmented query and the discrepancy information.

7. The method of claim 6, further comprising:
responsive to determining that the answer (202) is not relevant to the query (303) or to determining that the answer (202) is not relevant to the evidence (340), performing one of providing a notification to a user (301) indicating a verification failure without performing the verifying (822);
responsive to determining that the answer (202) is relevant to the query (303) or to determining that the answer (202) is relevant to the evidence (340), performing the verifying (822).

8. The method of claim 6, wherein the fact (427) is one of a plurality of facts (427) extracted from the evidence (340), the claim (417) is one of a plurality of claims (417) extracted from the evidence (340), and the verifying (822) comprises determining whether every claim (417) is entailed by at least one fact (427) and none of the claims (417) are contradicted by any fact (427),
and optionally, wherein the evidence (340) comprises a document, and the providing of the answer (202) to the user (301) further comprises providing a citation to the document, the citation being a location in the documents corresponding to the fact (427).

9. The method of claim 6, further comprising:
determining a claim-to-fact relevance score (452) using a fact-to-claim alignment analyzer (450) comprising a natural language model; and
wherein the verifying (822) further comprises a second check, the second check comprising determining the claim (417) is relevant to the fact (427).

10. The method of claim 9, wherein the fact (427) is one of a plurality of facts (427) extracted from the evidence (340), the claim (417) is one of a plurality of claims (417) extracted from the evidence (340), wherein the fact-to-claim alignment analyzer (450) determines a relevance score for each fact-to-claim pairing, and further comprising:
determining a plurality of fact-to-query relevance scores (442) corresponding to respective fact-to-query pairings, the fact-to-query relevance scores (442) being determined by a fact-to-query alignment analyzer (440) and indicating a degree of confidence by the fact-to-query alignment analyzer (440) that a corresponding fact (427) is relevant to the query (303); and
wherein the verifying (822) further comprises determining whether the answer (202) is complete by determining whether any of the facts (427) that are determined to be relevant to the query (303) are not relevant to any of the claims (417).

11. A computer storage medium (1012) embodying instructions executable by a processor (1014), the instructions causing the processor (1014) to execute the instructions to perform:
receiving an answer (202) generated by a generative artificial intelligence (GAI) model (360) based on an augmented query, the augmented query comprising a query (303) from a user (301) and a request to answer the query (303) using evidence (340) determined to be relevant to the query (303);
based on determining that the answer (202) is relevant to both the query (303) and the evidence (340), performing additional verification checks, the additional verification checks comprising:
extracting facts (427) from the evidence (340), each fact (427) being a segment of the evidence (340),
extracting claims (417) from the answer (202), each claim (417) being a segment of the answer (202),
determining a plurality of claim-to-fact entailment scores (466) corresponding to each of respective claim-to-fact pairings, the claim-to-fact entailment scores (466) being determined by an agreement analyzer (460) comprising a natural language inference (NLI) model, and
verifying (822) the answer (202) based on a check of the plurality of claim-to-fact entailment scores (466); and
based on the verifying (822), (i) providing the answer (202) to the user (301) as a verified answer (490), (ii) providing a qualified answer including providing discrepancy information generated by the verifying (822), or (iii) generating another augmented query based on the augmented query and the discrepancy information.

12. The system (400) of claim 1, the method of claim 6 or the medium (1012) of claim 11, wherein the NLI model comprises a structuring model (464) that is trained to be specific to a particular knowledge domain, and optionally wherein the particular knowledge domain is medical science.

13. The medium (1012) of claim 11, wherein the check comprises determining whether every claim (417) is entailed by a fact (427) and none of the claims (417) are contradicted by any fact (427).

14. The medium (1012) of claim 13, wherein the evidence (340) comprises a document, and the providing of the answer (202) to the user (301) further comprises providing a citation to the document, the citation being a location in the documents corresponding to a fact (427) that entails a respective claim (417).

15. The medium (1012) of claim 11, wherein the instructions further comprise:
determining a plurality of claim-to-fact relevance scores (452) corresponding to each respective claim-to-fact pairing, the claim-to-fact relevance scores (452) being determined by a claim-to-fact alignment analyzer (450) comprising an embedding model; and wherein the verifying (822) further comprises a second check, the second check comprising determining whether every claim (417) is relevant to at least one fact (427); and/or
determining a plurality of fact-to-query relevance scores (442) corresponding to respective fact-to-query pairings, the fact-to-query relevance scores (442) being determined by a fact-to-query alignment analyzer (440) and indicating a degree of confidence by the fact-to-query alignment analyzer (440) that a corresponding fact (427) is relevant to the query (303); and wherein the verifying (822) further comprises a third check (912), the third check (912) comprising determining whether the answer (202) is complete by determining whether one of the facts (427) that is determined to be relevant to the query (303) is not relevant to one of the claims (417).
